# EUROPÄISCHE PATENTSCHRIFT

(11) **EP 2 142 269 B1**
(45) Veröffentlichungstag und Bekanntmachung des Hinweises auf die Patenterteilung: **16.03.2016**
(21) Anmeldenummer: 08735401.5
(22) Anmeldetag: 28.04.2008
(51) Int. Cl.: B01D 3/00, B01D 3/14

(54) **ALKOHOL-REKTIFIKATIONSANLAGE**
ALCOHOL RECTIFICATION PLANT
INSTALLATION DE RECTIFICATION D'ALCOOL

(30) Priorität: 03.05.2007 DE 102007020786
(43) Veröffentlichungstag der Anmeldung: 13.01.2010
(73) Patentinhaber: GEA Wiegand GmbH, 76275 Ettlingen (DE)
(72) Erfinder: BETHGE, Daniel, 2620 Neunkirchen (AT)
(74) Vertreter: Weickmann & Weickmann
(86) Internationale Anmeldenummer: PCT/EP2008/003438
(87) Internationale Veröffentlichungsnummer: WO 2008/135192

(56) Entgegenhaltungen:
- WO-A-2004/088230
- WO-A-2008/046633
- WO-A-2008/046634
- JP-A- 2 184 643
- US-A- 3 032 481
- US-A- 4 309 254

## Beschreibung

Die Erfindung betrifft eine Alkohol-Rektifikationsanlage mit wenigstens einer Rektifikationskolonne, der zu rektifizierendes Alkohol-Wasser-Gemisch als Zufluss zuführbar ist und deren Alkohol-Kopfbrüden für die Energiezufuhr zu einem Reboiler einer Kolonne der Anlage ausnutzbar ist.

In einer herkömmlichen Destillieranlage wird der Alkohol aus fermentierten, d.h. vergorener und damit Alkohol enthaltender Maische mittels einer Destillationskolonne, auch Maischekolonne genannt, ausgetrieben. Da die Alkoholkonzentration des in der Destillationskolonne ausgetriebenen Rohalkohols vergleichsweise niedrig ist, muss die Alkoholkonzentration in einer nachfolgenden Rektifikationkolonne und gegebenenfalls einem Dehydrierungsprozess auf einen seiner späteren Verwendung beispielsweise als Kraftstoff für Brennkraftmaschinen oder Industriealkohol, aber auch als Trinkalkohol genügenden Wert erhöht werden.

Der Energiebedarf der Destillieranlage wird zum größten Teil durch den Energiebedarf der Rektifikationskolonne bestimmt, die üblicherweise durch Frischdampf beheizt wird. Es ist üblich, den Energieverbrauch der Destillationsanlage zu senken, indem die Wärmeenergie des Alkohol-Kopfbrüdens der Rektifikationskolonne zurückgewonnen wird. So ist es bekannt, mit dem Kopfbrüden der Rektifikationskolonne einen Reboiler einer weiteren Kolonne, beispielsweise der Destillationskolonne oder einer der Rektifikationskolonne im Aufkonzentrierungsweg vorgeschalteten Verstärkungskolonne zu beheizen. In diesem Zusammenhang ist es auch bekannt, den Kopfbrüden einer den Rohalkohol gewinnenden Destillationskolonne mit Hilfe eines mechanischen Brüdenverdichters so weit zu verdichten, dass der Energieinhalt des verdichteten Brüdens ausreicht, um den Reboiler der Destillationskolonne zu heizen.

Aus WO 2004/088230 A2 ist eine Destillationsanlage mit einer Destillationskolonne und einer der Destillationskolonne nachgeschalteten Rektifikationskolonne bekannt. Die Destillationskolonne trennt aus alkoholhaltiger Maische ein Alkohol-Wasser-Gemisch mit einer Eingangskonzentration des Alkohols von wenigstens 30 Vol.% des Gemisches ab und führt es der Rektifikationskolonne über einen der Energierückgewinnung dienenden Verdampfer als Zulauf zu. Ein Anteil des Alkohol-Kopfbrüdens der Rektifikationskolonne wird zur Energiezufuhr zu einem Reboiler der Destillationskolonne ausgenutzt. Ein der Rektifikationkolonne zugeordneter Reboiler wird mit Frischdampf beheizt.

Aus US 4,309,254 A ist eine weitere Alkohol-Destillationsanlage bekannt, bei welcher das von einer Destillationskolonne aus alkoholhaltiger Maische abgetrennte Alkohol-Wasser-Gemisch über eine mehrstufige Verdampferanlage konzentriert und sowohl der Destillationskolonne als auch einer die Alkohol-Konzentration weiter erhöhenden Rektifikationkolonne als Rücklauf zugeführt wird. Alkohol-Kopfbrüden der Rektifikationkolonne heizt einen Verdampfer der mehrstufigen Verdampferanlage, die in der Destillationskolonne anfallende Schlempe eindickt. Der von dem Verdampfer gelieferte Dampfanteil wird in einem Verdichter verdichtet und zu seinem größeren Teil der Destillationskolonne und der Verdampferanlage einerseits und zu seinem kleineren Anteil der Rektifikationkolonne jeweils zur Beheizung zugeführt.

Es ist Aufgabe der Erfindung einen Weg zu zeigen, wie die zum Betrieb der Rektifikationskolonne bereitzustellende Energie zum größten Teil zurückgewonnen werden kann.

Die Erfindung ist durch die in Anspruch 1 angegebenen Merkmale gekennzeichnet. Ausgehend von der eingangs erläuterten Alkohol-Rektifikationsanlage wird diese Aufgabe dadurch gelöst, dass der Alkohol-Kopfbrüden der Rektifikationskolonne zusätzlich für die Energiezufuhr zu einem zumindest einen Teil des zu rektifizierenden Alkohol-Wasser-Gemisches verdampfenden Verdampfer ausgenützt ist und dass der verdampfte Teil des Alkohol-Wasser-Gemisches über einen Verdichter der Rektifikationskolonne als Zufluss zuführbar ist.

Der Erfindung liegt die Idee zugrunde, nur einen Teil der Kondensationswärme der Alkohol-Kopfbrüden der Rektifikationskolonne für das Heizen eines Reboilers zu nutzen und statt dessen den verbleibenden Teil der Kondensationswärme für das Verdampfen eines Anteils des der Rektifikationskolonne zuzuführenden Zulaufs an Alkohol-Wasser-Gemisch zu nutzen. Der verdampfte Anteil des Zulaufs wird in einem maschinellen Brüdenverdichter verdichtet und gasförmig in die Rektifikationskolonne geleitet. Die hierfür erforderliche Kompressionsarbeit ist deutlich geringer als die Arbeit, die zum Heizen des dem Fuß der Rektifikationskolonne zugeordneten Reboilers erforderlich ist, da die Produktzulauftemperatur der Rektifikationskolonne niedriger ist als die Temperatur am Kolonnenfuß.

Die erfindungsgemäße Rektifikationsanlage kann zum Rektifizieren von Rohalkohol, beispielsweise in Form eines Ethylalkohol-Wasser-Gemisches, aber auch für andere Stoffsysteme, beispielsweise Isopropylalkohol-WasserGemisch oder Methanol-Wasser-Gemisch eingesetzt werden, solange die Eingangskonzentration des Alkohols wenigstens 30 Vol.% des Gemisches beträgt.

Der Verdampfer bildet zugleich den Kondensator der Rektifikationskolonne und ist bevorzugt als Fallfilmverdampfer ausgebildet. Dies hat den Vorteil, dass die Kopfbrüdentemperatur der Rektifikationskolonne nur wenig höher, beispielsweise 5°C höher als die Siedetemperatur des zu verdampfenden Alkohol-Wasser-Gemisches sein muss.

Dem Verdampfer ist zweckmäßigerweise ein den Dampfanteil des Alkohol-Wasser-Gemisches von dessen Flüssigkeitsanteil trennender Separator nachgeschaltet und es ist vorgesehen, dass sowohl der über den Verdichter geführte Dampfanteil als auch der Flüssigkeitsanteil der Rektifikationskolonne als Zulauf zuführbar ist. Der verdichtete Dampfanteil wird hierbei zweckmäßigerweise oberhalb des Zuführniveaus des Flüssigkeitsanteils der Rektifikationskolonne zugeführt.

Der Verdichter erhöht den Druck des Dampfanteils auf den in der Rektifikationskolonne herrschenden Druck. Der Verdichter kann als thermischer Verdichter, beispielsweise als Strahlpumpe ausgebildet sein. Bevorzugt ist jedoch ein mechanischer Verdichter, da dieser elektromotorisch bei vergleichsweise niedrigen Energiekosten betrieben werden kann.

Der Verdampfer verdampft lediglich einen Teil des Alkohol-Kopfbrüdens der Rektifikationskolonne. Dem Kopfbrüdenweg des Verdampfers ist in einer bevorzugten Ausgestaltung ein den Alkohol-Kopfbrüden in einen Dampfanteil und einen Flüssigkeitsanteil trennender Separator nachgeschaltet. Bei dem Separator handelt es sich, wie auch bei dem vorangegangen Erläuterten, das Alkohol-Wasser-Gemisch in einen Dampfanteil und einen Flüssigkeitsanteil trennenden Separator bevorzugt um einen Entspannungsabscheider. Der aus dem Dampfanteil des Alkohol-Kopfbrüdens gewonnene Dampfanteil wird hierbei über einen weiteren Verdichter dem Reboiler für dessen Energiezufuhr zugeführt. Bei dem mittels des Separators aus dem Alkohol-Kopfbrüden abgetrennten Flüssigkeitsanteil handelt es sich um rektifizierten Alkohol.

Ähnlich dem vorangegangen erwähnten Verdampfer handelt es sich auch bei dem Reboiler zweckmäßigerweise um einen Fallfilmverdampfer, um mit vergleichsweise niedriger Verdichterleistung auskommen zu können. Auch bei dem weiteren Verdichter kann es sich um einen thermischen Verdichter, wie zum Beispiel eine Strahlpumpe oder dergleichen handeln. Insbesondere für die Verdichtung von Ethylalkohol enthaltenden Dämpfen ist der weitere Verdichter gleichfalls bevorzugt als mechanischer Verdichter ausgebildet.

In einer bevorzugten Ausgestaltung ist der Reboiler der Rektifikationskolonne zu deren Heizung zugeordnet. Auf diese Weise lässt sich nahezu der gesamte Energiebedarf der Rektifikationskolonne zurückgewinnen. Es versteht sich aber, dass der Reboiler auch einer weiteren Kolonne der Rektifikationsanlage, beispielsweise einer vorgeschalteten Verstärkungskolonne, zugeordnet sein kann.

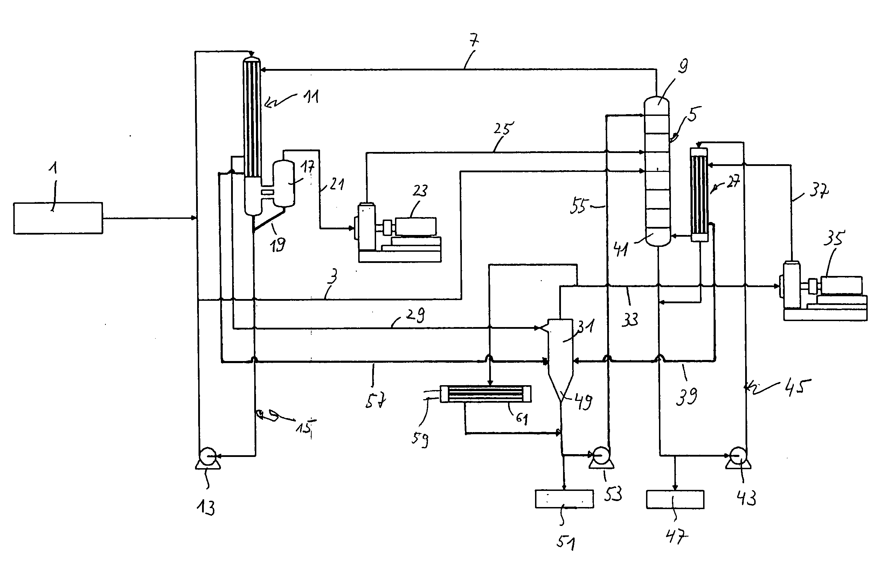

Im Folgenden wird ein Ausführungsbeispiel der Erfindung anhand einer Zeichnung näher erläutert. Die Zeichnung zeigt schematisch eine Rektifikationsanlage gemäß der Erfindung.

Die Rektifikationsanlage dient der Aufkonzentrierung von Ethyl Rohalkohol mit einer Konzentration von 40 bis 60 Vol.% zu rektifiziertem Ethylalkohol mit wenigstens 92 Vol.%. Der Rohalkohol wird in auf etwa 65°C vorgewärmter Form bei 1 aus einer Vorstufe des Destillationsprozesses, beispielsweise einer Destillationskolonne bzw. Maischekolonne über eine Leitung 3 einer Rektifikationskolonne 5 als Zulauf zugeführt. Die Betriebsenergie erhält die Rektifikationskolonne 5 zum größten Teil aus der Rückgewinnung des über eine Leitung 7 aus dem Kopfbereich 9 der Rektifikationskolonne 5 abziehenden Alkohol-Kopfbrüden. Der Alkohol-Kopfbrüden wird über die Leitung 7 einem zugleich den Kondensator der Rektifikationskolonne 5 bildenden Fallfilmverdampfer 11 zugeführt, der einen Anteil des bei 1 zugeführten Alkohol-Wasser-Gemisches des Rohalkohols verdampft. Der Rohalkohol zirkuliert in einem eine Pumpe 13 enthaltenden Umlaufkreis 15, von dem stromabwärts der Pumpe 13 auch die den Rohalkohol der Rektifikationskolonne 5 zuführende Leitung 3 abzweigt. An den Fuß des Fallfilmverdampfers 11 ist ein Entspannungsabscheider 17 angeschlossen, der den im Verdampfer 11 erzeugten Dampfanteil des Rohalkohols von dessen Flüssigkeitsanteil trennt. Während der Flüssigkeitsanteil des Rohalkohols über eine Leitung 19 in den Umlaufkreis 15 zurückgeführt wird, wird der über eine Leitung 21 aus dem Abscheider 17 abgezogene Dampfanteil einem mechanischen, elektromotorisch angetriebenen Verdichter 23 zugeführt, der den Dampfanteil gegebenenfalls unter Temperaturerhöhung auf den in der Rektifikationskolonne 5 herrschenden Betriebsdruck verdichtet. Der verdichtete Dampfanteil wird über eine Leitung 25 der Rektifikationskolonne 5 als zusätzlicher Zulauf zugeführt, wobei das Zulaufniveau der Leitung 25 oberhalb des Zulaufniveaus der Leitung 3 liegt. Der Verdichter 23 liefert damit über den Zulauf an verdichtetem Alkoholdampf einen Teil der Betriebsenergie der Rektifikationskolonne 5.

Ein weiterer Anteil der Betriebsenergie der Rektifikationskolonne 5 wird von einem als Fallfilmverdampfer ausgebildeten Reboiler 27 geliefert, dessen Energie seinerseits aus dem Alkohol-Kopfbrüden der Rektifikationskolonne 5 stammt. Der in dem Fallfilmverdampfer 11 energetisch teilweise abgearbeitete Alkohol-Kopfbrüden wird über eine Leitung 29 einem weiteren Entspannungsabscheider 31 zugeführt, der den Kopfbrüden in einen Dampfanteil und einen Flüssigkeitsanteil trennt. Der Dampfanteil wird über eine Leitung 33 einem weiteren mechanischen Verdichter 35 zugeführt, der den Druck und die Temperatur des Dampfanteils erhöht und dem Fallfilmverdampfer 27 über eine Leitung 37 zu dessen Beheizung zuführt. Der in dem Fallfilmverdampfer 27 zumindest teilweise energetisch abgearbeitete Dampf wird zusammen mit seinem Kondensat über eine Leitung 39 in den Entspannungsabscheider 31 zurückgeführt. Der Reboiler 27 ist seinerseits in einem durch den bei 41 angedeuteten Fuß der Rektifikationskolonne 5 führenden, eine Pumpe 43 enthaltenden Zirkulationskreis 45 angeordnet, der die im Reboiler 27 verfügbare Betriebsenergie auf die Rektifikationskolonne 5 überträgt. Bei 47 ist ein Auslass für das im Wesentlichen alkoholfreie Lutterwasser der Rektifikationskolonne 5 angedeutet.

Der Entspannungsabscheider 31 liefert an seinem Flüssigkeitsauslass 49 den bei 51 abziehbaren rektifizierten Alkohol. Ein Teil des rektifizierten Alkohols wird über eine Pumpe 53 und eine Leitung 55 dem Kopfbereich 9 der Rektifikationskolonne 5 als Rücklauf zugeführt. Über eine Leitung 57 wird darüber hinaus in dem Fallfilmverdampfer 11 anfallendes Alkoholkondensat dem Entspannungsabscheider 31 zugeführt. Für die Prozessregelung überbrückt ein bei 59 mit Kühlwasser gespeister Regelkondensator 61 den Entspannungsabscheider 31. Der Regelkondensator 61 regelt den aus dem Entspannungsabscheider 31 dem Verdichter 35 zugeführten Dampfanteil, in dem er in einem Nebenschlussweg einen Teil des Dampfs zu rektifiziertem Alkohol kondensiert.

In der vorstehend erläuterten Rektifikationsanlage wird nicht die gesamte Betriebsenergie der Rektifikationskolonne 5 von dem Reboiler 27 geliefert. Ein Teil der den Reboiler 27 heizenden Energie des Alkohol-Kopfbrüdens der Rektifikationskolonne 5 wird in dem Fallfilmverdampfer 11 für die Verdampfung des Rohalkoholzuflusses ausgenutzt. Der den dampfförmigen Zufluss komprimierende Verdichter 23 kommt mit geringerer Kompressionsarbeit aus, da die Temperatur des von dem Verdichter 23 verdichteten Zulaufs niedriger ist als die vom Reboiler 27 einzuhaltende Temperatur. Im dargestellten Ausführungsbeispiel können bezogen auf die zur Verfügung zu stellende elektrische Energie in der Größenordnung von 40 % an Energie eingespart werden.

## Patentansprüche

1. Alkohol-Rektifikationsanlage mit wenigstens einer Rektifikationskolonne (5), der zu rektifizierendes Alkohol-Wasser-Gemisch mit einer Eingangskonzentration des Alkohols von wenigstens 30 Vol.% des Gemisches als Zufluss zuführbar ist und deren Alkohol-Kopfbrüden für die Energiezufuhr zu einem Reboiler (27) einer Kolonne der Anlage rausnutzbar ist,
**dadurch gekennzeichnet, dass**
der Alkohol-Kopfbrüden der Rektifikationskolonne (5) zusätzlich für die Energiezufuhr zu einem zumindest einen Teil des zu rektifizierenden Alkohol-Wasser-Gemisches verdampfenden Verdampfer (11) ausnutzbar ist dass der in dem Verdampfer (11) verdampfte Teil des Alkohol-Wasser-Gemisches über einen Verdichter (23) der Rektifikationskolonne (5) als Zufluss zuführbar ist,
dass im Kopfbrüdenweg des Verdampfers (11) dem Verdampfer (11) ein den Alkohol-Kopfbrüden in einen Dampfanteil und einen Flüssigkeitsanteil trennender Separator (31) nachgeschaltet ist und dass der Reboiler (27)
der Rektifikationskolonne (5) zugeordnet ist und der von dem Separator (31) abgetrennte Dampfanteil über einen weiteren Verdichter (35) dem Reboiler (27) der Rektifikationskolonne (5) für dessen Energiezufuhr zuführbar ist.

2. Anlage nach Anspruch 1 , **dadurch gekennzeichnet, dass** der Verdampfer (11) und/oder der Reboiler (27) als Fallfilmverdampfer ausgebildet sind.

3. Anlage nach Anspruch 1 oder 2, **dadurch gekennzeichnet, dass** dem Verdampfer (11) ein den Dampfanteil des Alkohol-Wasser-Gemischesvon dessen Flüssigkeitsanteil trennender weiterer Separator (17), insbesondere in Form eines Entspannungsabscheiders nachgeschaltet ist und dass sowohl der über den Verdichter (23) geführte Dampfanteil als auch der Flüssigkeitsanteil der Rektifikationskolonne (5) als Zulauf zuführbar ist.

4. Anlage nach Anspruch 3, **dadurch gekennzeichnet, dass** der verdichtete Dampfanteil oberhalb der Zuführniveaus des Flüssigkeitso anteils der Rektifikationskolonne (5) zuführbar ist.

5. Anlage nach einem der Ansprüche 1 bis 4, **dadurch gekennzeichnet, dass** der Verdichter (23) als mechanischer Verdichter ausgebildet ist.

6. Anlage nach einem der Ansprüche 1 bis 5, **dadurch gekennzeichnet, dass** der Separator (31) als Entspannungsabscheider ausgebildet ist.

7. Anlage nach Anspruch 6, **dadurch gekennzeichnet, dass** der weitere Verdichter (35) als mechanischer Verdichter oder thermischer Verdichter ausgebildet ist.

## Claims

1. Alcohol rectification plant with at least one rectification column (5), to which the alcohol-water mixture to be rectified can be supplied as a feed stream with an initial alcohol concentration of at least 30 percent by volume of the mixture and the top alcohol vapour of which can be used for supplying energy to a reboiler (27) of a column of the plant,
**characterized in that**
the top alcohol vapour of the rectification column (5) can additionally be used for supplying energy to an evaporator (11) which evaporates at least part of the alcohol-water mixture to be rectified,
**in that** the part of the alcohol-water mixture evaporated in the evaporator (11) is supplied to the rectification column (5) as a feed stream via a compressor (23),
and **in that**
a separator (31) separating the top alcohol vapour into a vapour portion and a liquid portion is arranged downstream of the evaporator (11) in the top alcohol vapour path of the evaporator (11) and **in that** the reboiler (27) is associated to the rectification column (5) and **in that** the vapour portion separated by the separator (31) can be supplied to the reboiler (27) of the rectification column (5) via another compressor (35) for energy supply to the latter.

2. Plant according to claim 1, **characterized in that** the evaporator (11) and/or the reboiler (27) are designed as falling film evaporator.

3. Plant according to claim 1 or 2, **characterized in that** another separator (17) separating the vapour portion of the alcohol-water mixture from its liquid portion is arranged downstream of the evaporator (11), in particular in the form of a flash separator and **in that** the vapour portion guided via the compressor (23) as well as the liquid portion of the rectification column (5) can be supplied as a feed stream.

4. Plant according to claim 3, **characterized in that** the condensed vapour portion can be supplied to the rectification column (5) above the supply level of the liquid portion.

5. Plant according to one of claims 1 to 4, **characterized in that** the compressor (23) is designed as a mechanical compressor.

6. Plant according to one of claims 1 to 5, **characterized in that** the separator (31) is designed as a flash separator.

7. Plant according to claim 6, **characterized in that** the further compressor (35) is designed as a mechanical compressor or a thermal compressor.

## Revendications

1. Installation de rectification d'alcool avec au moins une colonne de rectification (5) à laquelle le mélange alcool-eau à rectifier peut être amené en tant qu'affluent avec une concentration initiale d'au moins 30 % en volume du mélange, et dont la vapeur d'alcool de fond peut être utilisée pour l'alimentation énergétique d'un rebouilleur (27) d'une colonne de l'installation, **caractérisée en ce que**
la vapeur d'alcool de fond de la colonne de rectification (5) peut également utilisée pour l'alimentation énergétique d'un évaporateur (11) conçu pour évaporer au moins une partie du mélange alcool-eau à rectifier,
**en ce que** la portion du mélange alcool-eau évaporée dans l'évaporateur (11) peut être amenée à la colonne de rectification (5) en tant qu'affluent par l'intermédiaire d'un condenseur (23),
**en ce que** dans le trajet de la vapeur d'alcool de fond de l'évaporateur (11) un séparateur est arrangée en aval du séparateur (11) séparant la vapeur d'alcool de fond en une fraction vapeur et une fraction liquide, et **en ce que** le rebouilleur (27) est associé à la colonne de rectification (5) et que la fraction vapeur séparée par le séparateur (31) peut être amenée au rebouilleur (27) de la colonne de rectification (5) par l'intermédiaire d'un autre condenseur (35) pour son alimentation énergétique.

2. Installation selon la revendication 1, **caractérisée par** l'évaporateur (11) et/ou le rebouilleur (27) étant adaptés en tant qu'évaporateur à film.

3. Installation selon les revendications 1 ou 2, **caractérisée en ce qu'**un autre séparateur (17) séparant la fraction vapeur du mélange alcool-eau de la fraction liquide est arrangé en aval de l'évaporateur (11), en particulier sous forme de séparateur flash, et **en ce que** la fraction vapeur guidée via le condenseur (25) ainsi que la fraction liquide peuvent être amenées à la colonne de rectification (5) en tant qu'affluent.

4. Installation selon la revendication 3, **caractérisée en ce que** la fraction vapeur condensée peut être amenée à la colonne de rectification (5) au-dessus du niveau d'alimentation de la fraction liquide.

5. Installation selon une des revendications 1 à 4, **caractérisée en ce que** le condenseur (23) est adaptée sous forme de condenseur mécanique.

6. Installation selon une des revendications 1 à 5, **caractérisée en ce que** le séparateur (31) est adaptée sous forme de séparateur flash.

7. Installation selon la revendication 6, **caractérisée en ce que** le condenseur (35) supplémentaire est adapté sous forme de condenseur mécanique ou de condenseur thermique.
